# EUROPEAN PATENT APPLICATION

(11) **EP 4 317 487 A1**
(43) Date of publication of application: **07.02.2024**
(21) Application number: 22780885.4
(22) Date of filing: 29.03.2022
(51) Int. Cl.: C22B 7/00, C22B 3/06, C22B 3/16, H01M 10/54

(54) **SEPARATION METHOD FOR SEPARATING CONSTITUENT MATERIAL FROM MEMBER AND METHOD FOR PROCESSING MEMBER**

(30) Priority: 31.03.2021 JP 2021059390
(71) Applicant: Mitsui Mining & Smelting Co., Ltd., Shinagawa-ku Tokyo 141-8584 (JP)
(72) Inventor: TAKAHASHI, Tsukasa, Ageo-shi, Saitama 362-0021 (JP)
(74) Representative: Novagraaf Technologies
(86) International application number: PCT/JP2022/015345
(87) International publication number: WO 2022/210674

(57) **Abstract**

A separation method according to the present invention includes the steps of: mixing a member that includes an active material and a solid electrolyte with a solvent to obtain a mixture; and subjecting the mixture to solid-liquid separation to obtain a solid component and a separated liquid. The solid electrolyte contains a lithium (Li) element, a sulfur (S) element, and a phosphorous (P) element. The solid electrolyte is dissolved in the solvent. It is preferable that the separation method further includes a step of recovering a compound that contains at least one of the Li element, the S element, and the P element from the separated liquid. It is also preferable that the separation method further includes a step of acid-dissolving the solid component to recover a carbon component.

## Description

### Technical Field

The present invention relates to a separation method for separating a constituent material from a member that includes an active material and a solid electrolyte, and a processing method for processing the member.

### Background Art

A lithium ion battery has a structure that includes a metal can or an aluminum foil laminate film as an outer casing material, and a negative electrode material and a positive electrode material that are contained in the outer casing material, the negative electrode material being obtained by fixing a negative electrode active material such as graphite to a current collector such as a copper foil, and the positive electrode material being obtained by fixing a positive electrode active material such as lithium nickel oxide or lithium cobalt oxide to a positive electrode current collector such as an aluminum foil. In the case where an electrolyte in the form of a liquid is used, a separator made of a porous polypropylene film or the like is provided between the positive electrode material and the negative electrode material, and an organic solvent that contains a lithium salt electrolyte is contained as a liquid electrolyte. On the other hand, in the case where an electrolyte in the form of a solid is used, a lithium ion conductive material in the form of a powder is provided to fill between the positive electrode material and the negative electrode material.

As described above, lithium ion batteries contain valuable components such as nickel, cobalt, copper, and lithium. From the viewpoint of effective use of resources and a reduction in environmental burden, studies have been conducted on techniques for recovering and reusing the valuable components. For example, Patent Literature 1 proposes a method for recovering lithium from lithium ion battery waste. Patent Literature 2 discloses a method in which an attempt is made to use leaching, neutralization, and separation as means for recovering lithium from a material obtained by roasting lithium ion battery scrap.

### Citation List

### Patent Literature

Patent Literature 1: JP 2019-99901A
Patent Literature 2: JP 2019-160429A

### Summary of Invention

In recent years, studies have been actively conducted on a solid-state battery that includes a solid electrolyte. On the other hand, studies on a technique for recovering a valuable metal from a solid-state battery are not sufficiently conducted.

As a method for recovering a valuable metal from a liquid-based battery that contains a liquid electrolyte, a technique is known in which the liquid-based battery is burnt to remove the liquid electrolyte. The burning step as in the above-described technique results in carbon dioxide emission and increased environmental burden. For this reason, there is a problem in applying the method to a solid-state battery. Also, in the case where the method is applied to a sulfide-based solid-state battery that includes a solid sulfide electrolyte, another problem arises in that, as a result of the burning step being performed, a sulfur oxide is also emitted in addition to carbon dioxide. Furthermore, there is also a problem in that, by burning a solid-state battery, a P element that is contained in the solid-state battery forms a chemically stable substance such as a phosphate, which makes it difficult to recover the P element. Patent Literatures 1 and 2 give no consideration to solving these problems.

Accordingly, it is an object of the present invention to provide a method, with which it is possible to favorably separate and recover a predetermined constituent material from a member that contains a Li element, an S element, and a P element while suppressing environmental burden.

The present invention provides a method for separating a constituent material from a member, the method including the steps of: mixing the member that includes an active material and a solid electrolyte with a solvent to obtain a mixture; and subjecting the mixture to solid-liquid separation to obtain a solid component and a separated liquid, wherein the solid electrolyte contains a lithium (Li) element, a sulfur (S) element, and a phosphorous (P) element, and the solid electrolyte is dissolved in the solvent as a result of the member being mixed with the solvent.

The present invention provides a method for processing a member, including the steps of: mixing the member that includes an active material and a solid electrolyte that contains a lithium (Li) element, a sulfur (S) element, and a phosphorous (P) element with a solvent to obtain a mixture in which the solid electrolyte is dissolved in the solvent; subjecting the mixture to solid-liquid separation to obtain a solid component and a separated liquid; and recovering a compound that contains at least one of the lithium (Li) element, the sulfur (S) element, and the phosphorous (P) element from the separated liquid, wherein the solid electrolyte is dissolved in the solvent as a result of the member being mixed with the solvent.

The present invention provides a method for processing a member, including the steps of: mixing the member that includes an active material and a solid electrolyte with a solvent to obtain a mixture in which the solid electrolyte is dissolved in the solvent; subjecting the mixture to solid-liquid separation to obtain a solid component and a separated liquid; and acid-dissolving the solid component to recover a carbon component that is a dissolved residue, wherein the solid electrolyte contains a lithium (Li) element, a sulfur (S) element, and a phosphorous (P) element, and
the solid electrolyte is dissolved in the solvent as a result of the member being mixed with the solvent.

The present invention provides a method for processing a member, including the steps of: mixing the member including an active material and a solid electrolyte with a solvent to obtain a mixture in which the solid electrolyte is dissolved in the solvent, the active material containing an element M, where M represents at least one of lithium (Li), nickel (Ni), manganese (Mn), cobalt (Co), aluminum (Al), iron (Fe), titanium (Ti), tin (Sn), niobium (Nb), silicon (Si), carbon (C), and copper (Cu); subjecting the mixture to solid-liquid separation to obtain a solid component and a separated liquid; acid-dissolving the solid component to obtain a dissolution liquid; and recovering the element M from the dissolution liquid, wherein the solid electrolyte contains a lithium (Li) element, a sulfur (S) element, and a phosphorous (P) element, and the solid electrolyte is dissolved in the solvent as a result of the member being mixed with the solvent.

### Brief Description of Drawing

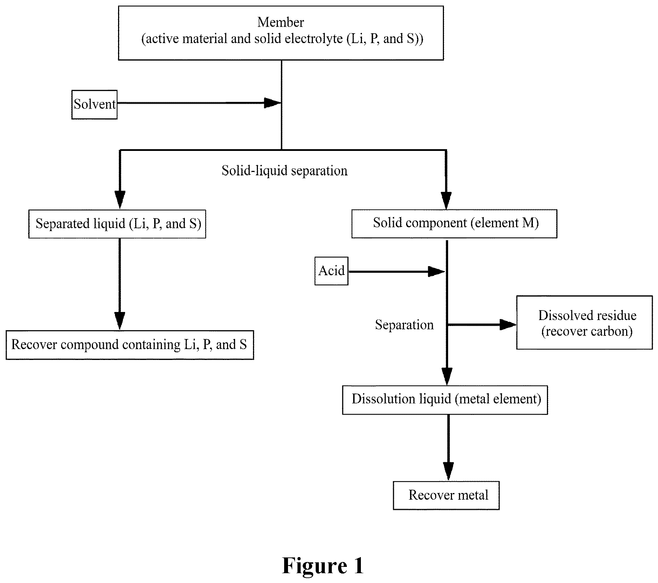

[Fig. 1] Fig. 1 is a schematic diagram showing steps performed in the present invention.

### Description of Embodiment

Hereinafter, the present invention will be described based on a preferred embodiment thereof. A separation method and a processing method according to the present invention are both performed using a member that includes an active material and a solid electrolyte as a target. Unless otherwise stated, the following description is applied to both the separation method and the processing method of the present invention (hereinafter, they are also referred to collectively as "the method of the present invention") as appropriate.

Typically, an active material and a solid electrolyte are constituent members that constitute a solid-state battery that contains a solid electrolyte. The solid-state battery includes a positive electrode layer, a negative electrode layer, and a solid electrolyte layer provided between the positive electrode layer and the negative electrode layer, which are molded as a unitary structure. The active material is contained in at least one of the positive electrode layer and the negative electrode layer. The solid electrolyte is contained in at least the solid electrolyte layer. As used herein, the term "solid-state battery" encompasses, in addition to a solid-state battery that contains no liquid substance nor gel substance as the electrolyte, a solid-state battery that contains, for example, less than 50 mass% of a liquid substance or a gel substance as the electrolyte.

Specific examples of the target to be subjected to separation and processing in the method of the present invention include: a positive electrode layer; a negative electrode layer; a solid electrolyte layer; and a solid-state battery that includes these members. Other examples include: a member obtained by removing an electrode layer that contains a solid electrolyte from a battery; a member obtained by removing an active material-containing electrode layer and a solid electrolyte layer unitarily or separately from a solid-state battery; a defective, a remaining piece, and remaining debris that occur during production of a solid-state battery; and the like.

The solid electrolyte that is used as a target in the method of the present invention contains a lithium (Li) element, a sulfur (S) element, and a phosphorous (P) element. That is, the solid electrolyte is preferably a mixture of the above-listed elements, or a compound such as a sulfide.

Examples of the solid electrolyte that contains a sulfide include compounds represented by Li₂S-P₂S₅, Li₂S-P₂S₅-LiX, where X represents one or more halogen elements, Li₂S-P₂S₅-P₂O₅, Li₂S-Li₃PO₄-P₂S₅, Li₃PS₄, Li₄P₂S₆, Li₁₀GeP₂S₁₂, Li_{3.25}Ge_{0.25}P_{0.75}S₄, Li₇P₃S₁₁, Li_{3.25}P_{0.95}S₄, and LiₐPS_{b}X_{c}, where X represents at least one halogen element, a is a number of 3.0 or more and 6.0 or less, b is a number of 3.5 or more and 4.8 or less, and c is a number of 0.1 or more and 3.0 or less. These solid sulfide electrolytes preferably have a crystal phase that has an argyrodite-type structure from the viewpoint of enhancing the separation recovery efficiency. Other examples of the target to be subjected to separation and processing include: raw material compounds for forming solid electrolyte such as Li₂S, P₂S₅ and lithium halide; and the like.

The above-described active materials each independently contain an element M. In the specification of the present application, the element M represents at least one of: typical metal elements such as lithium (Li) and aluminum (Al); metalloid elements such as silicon (Si); non-metal elements such as carbon (C); and transition metal elements such as nickel (Ni), manganese (Mn), cobalt (Co), iron (Fe), titanium (Ti), tin (Sn), niobium (Nb), and copper (Cu). An ordinary solid-state battery contains at least one element of the above-described various types of metals and carbon as a constituent element that constitutes a positive electrode active material and a conductive material that are contained in a positive electrode material mixture that constitutes a positive electrode layer. The ordinary solid-state battery also contains at least one element of silicon and carbon as a constituent element that constitutes a negative electrode active material and a conductive material that are contained in a negative electrode material mixture that constitutes a negative electrode layer. The element M contained in each active material may be present as a single element independently of each of the positive electrode active material and the negative electrode active material, or may be present in the form of an oxide, a nitride, a compound such as a halide, or a mixture thereof.

The element M described above is a valuable component. Accordingly, the element M can be reused after being separated and recovered from the member. Also, by using the method of the present invention, it is possible to suppress an increase in environmental burden.

Hereinafter, a detailed description will be given of steps that are included in the method of the present invention. The steps of the method of the present invention are schematically shown in Fig. 1.

In the method of the present invention, first, a step (mixing step) of mixing a member that includes an active material and a solid electrolyte with a solvent to obtain a mixture is performed. In the mixing step, as a result of the member being mixed with the solvent, the solid electrolyte contained in the member is dissolved in the solvent. At this time, other constituent materials are preferably present dispersed in the solvent.

The mixing step can be performed under conditions in which the solid electrolyte can be dissolved in the solvent. As a temperature condition that can be used in the mixing step, for example, the mixing step may be performed in a non-heated state such as at room temperature or in a heated state. For example, the temperature condition is set to be preferably less than or equal to the boiling temperature of the solvent used. Specifically, the temperature condition is set to preferably 0°C or more, and more preferably 50°C or more. Also, the temperature condition is set to preferably, for example, 300°C or less, more preferably 200°C or less, even more preferably 100°C or less, and even much more preferably 80°C or less. As a result of the mixing step being performed in the above-described temperature condition, the solid electrolyte can be sufficiently dissolved in the solvent.

Also, as a pressure condition that can be used in the mixing step, the mixing step may be performed under atmospheric pressure or under pressure. In the case where the mixing step is performed under pressure, the pressure used in the mixing step may be set to, for example, 1 MPa or more, 10 MPa or more, or 15 MPa or more. Also, the pressure condition may be set to, for example, 50 MPa or less, 40 MPa or less, or 35 MPa or less. By adjusting the pressure condition as appropriate according to the solvent and the member used, the solid electrolyte can be favorably dissolved in the solvent.

The mixing time used in the mixing step can be changed as appropriate according to the amount of the member, the form of the member, the temperature condition, and the pressure condition. The mixing time may be set to, for example, 0.5 hours or more, 1 hour or more, or 3 hours or more. Also, the mixing time may be set to, for example, 100 hours or less, 50 hours or less, or 20 hours or less. When the mixing time is within the above-described range, the solid electrolyte can be sufficiently dissolved in the solvent.

The solvent in the mixing step is used to dissolve the solid electrolyte. In other words, the solvent preferably has a solubility sufficient to dissolve the solid electrolyte. Also, the solvent is preferably incapable of dissolving the active material. That is, it is preferable to use a solvent that only dissolves the solid electrolyte. By using a solvent that has properties described above, it is possible to favorably separate only the solid electrolyte. Also, as a result of the solvent being incapable of dissolving the active material, the solid electrolyte and the active material can be favorably separated and recovered. Furthermore, even when a member in which the presence state and the presence ratio of the active material and the solid electrolyte are unknown is used as the target, a separated and recovered substance is unlikely to be contaminated by another substance, and it is therefore possible to easily separate and recover all elements contained in the member, with the substances being independent of each other.

The solubility of the solvent for dissolving the solid electrolyte at, for example, an atmospheric pressure of 1 atm and a temperature of 20°C is preferably 1 mg/mL or more, more preferably 10 mg/mL or more, even more preferably 50 mg/mL or more, and even much more preferably 100 mg/mL or more. The higher the solubility of the solvent for dissolving the solid electrolyte, the more preferable it is. However, practically, the solubility is 500 mg/mL or less.

In the case where the member used as the target in the method of the present invention includes a plurality of types of solid electrolytes, it is preferable that the solvent has a solubility for dissolving at least one of the plurality of types of solid electrolytes that satisfies the above-described range. Also, from the viewpoint of facilitating separation and recovery, it is preferable that the solvent has a solubility for dissolving all of the plurality of types of solid electrolytes contained in the member that satisfies the above-described range. That is, in this step, a portion of each of one or more types of solid electrolytes may be dissolved. Alternatively, one of two or more types of solid electrolytes may be entirely dissolved, with the remaining solid electrolyte(s) being not dissolved at all or partially dissolved. However, from the viewpoint of separation recovery efficiency, it is preferable to use a solvent that can entirely dissolve all of the solid electrolytes.

Also, the solvent used in the mixing step has a solubility for dissolving the active material at, for example, an atmospheric pressure of 1 atm and a temperature of 20°C of preferably less than 3 mg/mL, and more preferably less than 1 mg/mL. It is even more preferable that the solvent is incapable of dissolving the active material.

The solvent is preferably composed mainly of an organic solvent. The organic solvent may be, for example, a solvent that has a hydroxyl group in the chemical structure, or a solvent that has no hydroxyl group in the chemical structure. Examples of the solvent that has a hydroxyl group include an alcohol solvent and a phenol solvent. Examples of the solvent that has no hydroxyl group include various types of solvents including an aliphatic or aromatic hydrocarbon solvent, an ester solvent, an aldehyde solvent, a ketone solvent, an ether solvent, and other solvents that have a hetero atom in the structure. These can be used alone or in a combination of two or more.

Examples of the hydrocarbon solvent include: a linear or branched aliphatic and saturated hydrocarbon with 5 or more and 12 or less carbon atoms such as pentane, hexane, heptane, octane, and decane; and an aliphatic and cyclic hydrocarbon with 5 or more and 12 or less carbon atoms such as cyclohexane, cyclopentane, cycloheptane, and cyclooctane. Also, examples of the aromatic hydrocarbon solvent include a substituted or unsubstituted aromatic hydrocarbon with 6 or more and 12 or less carbon atoms such as benzene, toluene, xylene, halogenated benzene, and alkylated benzene.

The alcohol solvent preferably has, for example, 1 or more carbon atoms, more preferably 2 or more carbon atoms, and even more preferably 4 or more carbon atoms. There is no particular limitation on the upper limit of the number of carbon atoms. However, the number of carbon atoms may be 12 or less, or 8 or less. As the alcohol solvent, for example, a linear or branched alcohol with a number of carbon atoms within the above-described range can be used. Specific examples include methanol, ethanol, 1-propanol, 1-butanol, 2-methyl-1-propanol, 2-butanol, 2-methyl-2-propanol, and the like.

Examples of the ester solvent include ethyl acetate, butyl acetate, and the like.

Examples of the aldehyde solvent include formaldehyde, acetaldehyde, and the like.

Examples of the ketone solvent include acetone, methyl ethyl ketone, and the like.

Examples of the ether solvent include diethyl ether, diisopropyl ether, tetrahydrofuran, dimethoxyethane, and the like.

Examples of the other solvents that have a hetero atom in the structure include acetonitrile, dimethylsulfoxide, dimethylformamide, and the like.

As a mixing method used in the mixing step, the member and the solvent may be mixed simultaneously, or one of the member and the solvent may be added to the other, and then mixed together. Also, the member used as the target to be subjected to separation and processing may be mixed, without being subjected to fragmentation processing such as milling or crushing. Alternatively, the member that has been subjected to fragmentation processing in advance to form the member into granules or a powder may be mixed. Alternatively, the member that has been or has not been subjected to fragmentation processing may be brought into contact with the solvent, and then subjected to fragmentation processing in the solvent.

The fragmentation processing is processing for breaking the member into fragments such that the size of the member after the processing is smaller than that before the processing. The fragmentation processing can be performed using, for example, a milling apparatus or a crushing apparatus.

Out of the methods described above, in the mixing step, it is preferable that the member that has not been subjected to fragmentation processing is brought into contact with the solvent, and then subjected to fragmentation processing in the solvent. Through the process described above, it is possible to increase the surface area of the member and enhance the contact efficiency with the solvent while increasing the amount of the member processed in this step, as compared with the case where the member is subjected to fragmentation processing in advance. As a result, the solid electrolyte can be efficiently dissolved in the solvent, and the separation recovery efficiency can be further improved.

From the viewpoint of enhancing the separation recovery efficiency and effectively reducing environmental burden, it is preferable to mix the member and the solvent at such a ratio that the concentration of the solid electrolyte in the mixture is within a predetermined range. To be specific, the concentration of the solid electrolyte in a separated liquid obtained by subjecting the mixture of the member and the solvent to solid-liquid separation is preferably, for example, 1 mass% or more, more preferably 5 mass% or more, and even more preferably 10 mass% or more. Also, the concentration may be, for example, 50 mass% or less, or 30 mass% or less.

In the mixture obtained through the mixing step, for example, a solid component such as the active material is preferably dispersed or settled in a solution in which the solid electrolyte is dissolved in the solvent. In the solution that constitutes the mixture, the Li element, the S element, and the P element that constitute the solid electrolyte, as well as other elements that are optionally contained such as a halogen element are contained in the form of ions.

Next, a step (separating step) of subjecting the mixture obtained through the mixing step to solid-liquid separation to obtain a solid component and a separated liquid is performed. There is no particular limitation on the solid-liquid separation method as long as it is possible to separate the mixture into a solid and a liquid. For example, it is possible to use methods such as filtration, centrifugation, and sedimentation. Through this step, a solid component and a separated liquid can be obtained. The solid component and the separated liquid may be stored as they are, or instead, the solid component and the separated liquid may be further subjected to a subsequent step such as a recovering step or a processing step performed in the specification of the present application.

The solid component obtained through the separating step is a solid substance that contains the active material, and preferably contains the element M described above that represents one or more elements. The content of the element M in the solid component is preferably, for example, 20 mass% or more, and more preferably 40 mass% or more. When the content of the element M in the solid component in the solid component is within the above-described range, it is possible to reduce the amount of acid used in acid dissolution that is performed later. Also, the separated liquid obtained through the separating step is derived from the solution in which the solid electrolyte is dissolved in the solvent, and the separated liquid preferably contains the Li element, the S element, and the P element.

Accordingly, with the method of the present invention that includes the mixing step and the separating step, it is possible to efficiently recover valuable components including the element M without performing processing that causes a relatively large environmental burden such as incineration processing, and reuse or sell the valuable components. It is also possible to efficiently recover sulfur and phosphorus that were difficult to be separated and recovered using conventional techniques. As a result, effective use of resources and a reduction in environmental burden can be achieved.

The solid component obtained through the separating step preferably contains the element M. Depending on the active material to be subjected to separation and processing, the solid component may contain, in addition to the metal element component represented by the element M, a carbon element component such as a simple substance of carbon (e.g., graphite, black lead, hard carbon, or the like).

In this case, from the viewpoint of efficiently separating the metal component and the carbon component so as to easily recover the metal component as a valuable component while recovering the carbon component, it is preferable to further perform a step (carbon recovering step) of acid-dissolving the solid component obtained through the separating step to recover the carbon component. In the case where the solid component contains a plurality of types of elements represented by the element M such as a metal component and a carbon component, in the carbon recovering step, from among the plurality of types of elements represented by the element M, a carbon element and an element represented by the element M other than the carbon element are separated and recovered. The carbon recovering step may be performed alone after the mixing step and the separating step have been performed, or may be performed in any order in combination with later-described preferred steps.

By bringing the solid component that contains a metal component and a carbon component into contact with an acid, the metal component can be dissolved in the acid, and a dissolution liquid in which the metal component is ionized can be obtained. In the carbon recovering step, the carbon component that is insoluble in acids can be obtained in the state of a dispersion solution in which the carbon component is present in the dissolution liquid as a solid dissolved residue. By performing, for example, any of the various solid-liquid separation methods described above on the dissolved residue, the carbon component that is the dissolved residue can be recovered in the form of a solid. The carbon component can be obtained with a little or substantially no alteration, and thus the carbon component can be reused in another product after subjected to cleaning, drying, or the like as needed. Accordingly, it is advantageous in terms of recovering the carbon component taking environmental burden into consideration.

As the acid used in the acid dissolution, it is possible to use an acid that can dissolve the metal component represented by the element M. Examples of the acid include mineral acids such as hydrochloric acid, nitric acid, and sulfuric acid.

The amount of acid used in the acid dissolution is preferably 1 mol or more, and more preferably 2 mol or more relative to 1 mol of the element M contained in the solid component. The amount of acid used in the acid dissolution is preferably 5 mol or less, and more preferably 3 mol or less. When the amount of acid used in the acid dissolution is within the above-described range, the metal component contained in the solid component can be sufficiently dissolved, as a result of which, the metal component and the carbon component are unlikely to be contaminated with each other. Accordingly, each component can be easily separated and recovered at a high purity.

The temperature condition, the pressure condition, and the like for performing the acid dissolution can be set to be the same as those for ordinary acid dissolution.

It is also preferable to subject the dissolution liquid obtained by acid-dissolving the solid component to a step of subjecting the dissolution liquid to electrolytic treatment to recover the element M, more specifically, a step (element M recovering step) of reducing a metal ion in the dissolution liquid to recover the metal element. Through this step, the element M can be precipitated from the dissolution liquid, and thus a simple substance or a compound that contains the element M at a high purity can be easily recovered in the form of a solid.

As the element M recovering step, it is preferable to select an appropriate method according to the type of element M. Specifically, it is more preferable to use a method with which the element M can be selectively recovered. Examples of the method for recovering the element M include: (i) a method in which the dissolution liquid is subjected to electrolytic treatment to recover the element M in the form of a solid; (ii) a method in which, through pH adjustment, a compound that contains an element other than the element M is subjected to solid-liquid separation or the like for separation and removal, thereafter pH adjustment is again performed to precipitate a compound that contains the element M, and the compound is reduced to recover the element M in the form of a solid; (iii) a method in which a compound that contains the element M is transitioned to an organic phase using an organic solvent, and the compound is subjected to liquid extraction to recover the element M; (iv) a method in which a compound that contains the element M is subjected to solid-liquid extraction using a predetermined extraction agent to recover the element M; and the like. As the extraction agent, for example, it is possible to use any of materials that are the same as those disclosed in JP 2013-139632A. However, the extraction agent is not limited thereto as long as the advantageous effects of the present invention can be obtained.

The element M recovering step may be performed alone after the mixing step and the separating step have been performed, or may be performed in combination with the carbon recovering step described above. In either case, it is more preferable to use, as the dissolution liquid subjected to the element M recovering step, a dissolution liquid in which there is no solid, from the viewpoint of efficiently recovering the element M at a high purity. That is, it is preferable to perform at least one of the methods (i) to (iv) described above to selectively recover the element M from an acid solution obtained by acid-dissolving the solid component, and then separating and removing a dissolved residue.

The separated liquid obtained through the separating step is a liquid in which there is no solid, and contains the following elements in ionic form: the Li element, the S element, and the P element that are derived from the solid electrolyte, and the halogen element that is optionally contained. From the viewpoint of efficiently and easily recovering these elements that can be used as solid electrolyte raw material to further reduce environmental burden, it is preferable to perform a step (compound recovering step) of recovering a compound that contains at least one of the Li element, the S element, and the P element from the above-described separated liquid. The compound recovering step may be performed alone after the mixing step and the separating step have been performed, or may be performed in any order in combination with the carbon recovering step and the element M recovering step described above.

As the method for recovering a compound that contains at least one of the Li element, the S element, and the P element from the separated liquid, for example, a method may be used in which a liquid medium constituting the separated liquid is removed. Specifically, the compound that contains at least one of the Li element, the S element, and the P element can be obtained in the form of a solid by removing the solvent contained in the separated liquid using a removing method such as heat drying or vacuum drying, and drying a substance other than the solvent to a solid.

The compound after drying to a solid obtained through the compound recovering step preferably contains one or more of: a phosphorus oxide; a compound that contains two or more of the Li element, the S element, and the P element; and a compound that contains the halogen element. In addition thereto, the dry solid may also contain a simple substance such as a simple substance of sulfur, or a mixture of the above-described compounds. The compound obtained through the compound recovering step preferably contains, for example, two or more of the Li element, the S element, the P element, and the halogen element, and more preferably at least one of lithium sulfide, phosphorus sulfide, and lithium halide. By recovering the above-described compound, it is possible to efficiently reuse the compound as a constituent material for a solid electrolyte.

The temperature condition, the pressure condition, and the like for performing the compound recovering step can be adjusted as appropriate according to the type of separated liquid and the type of compound.

The compound obtained through the compound recovering step contains constituent elements constituting the solid electrolyte, with a small amount of impurities. Accordingly, the compound may be used as it is as a solid sulfide electrolyte that is a material for producing a solid-state battery, or may be reused as a raw material for producing a solid sulfide electrolyte. In particular, it is preferable to reuse the compound as a raw material for producing a solid sulfide electrolyte from the viewpoint of convenience and production cost.

In the case where the compound obtained through the compound recovering step is used as a raw material for producing a solid sulfide electrolyte, the solid sulfide electrolyte can be obtained by, for example, mixing the compound with another raw material as needed to prepare a mixed powder, and then heating the mixed powder under a flow of reducing gas such as hydrogen sulfide gas.

The compound obtained through the compound recovering step preferably contains only components derived from the solid electrolyte. However, depending on the conditions used in each step, the compound may inevitably contain a component other than the constituent material constituting the solid electrolyte. In this case, the amount of the component inevitably contained in the compound is preferably 30 mass% or less, more preferably 15 mass% or less, and even more preferably 5 mass% or less.

Up to here, the present invention was described based on a preferred embodiment thereof. However, the present invention is not limited to the embodiment described above. For example, as described above, the method of the present invention may include only the mixing step and the separating step. Alternatively, the method of the present invention may include, in addition to the mixing step and the separating step, at least one or all of the carbon recovering step, the element M recovering step, and the compound recovering step. Also, the steps that are preferably performed after the mixing step and the separating step may be performed sequentially in any order, or may be performed simultaneously as needed.

### Industrial Applicability

According to the method of the present invention described in detail above, it is possible to favorably separate a predetermined constituent material from a member that includes an active material and a solid electrolyte while suppressing environmental burden.

## Claims

1. A method for separating a constituent material from a member, the method comprising the steps of:
- mixing the member that includes an active material and a solid electrolyte with a solvent to obtain a mixture; and
- subjecting the mixture to solid-liquid separation to obtain a solid component and a separated liquid, wherein
the solid electrolyte contains a lithium (Li) element, a sulfur (S) element, and a phosphorous (P) element, and
the solid electrolyte is dissolved in the solvent as a result of the member being mixed with the solvent.

2. The method for separating a constituent material from a member according to claim 1, wherein the solvent has a solubility for dissolving the solid electrolyte at 20°C of 1 mg/mL or more.

3. The method for separating a constituent material from a member according to claim 1 or 2, wherein the solvent has a hydroxyl group.

4. The method for separating a constituent material from a member according to any one of claims 1 to 3, wherein the active material contains an element M, where M represents at least one of lithium (Li), nickel (Ni), manganese (Mn), cobalt (Co), aluminum (Al), iron (Fe), titanium (Ti), niobium (Nb), silicon (Si), carbon (C), and copper (Cu).

5. The method for separating a constituent material from a member according to any one of claims 1 to 4, wherein the solid component contains an element M, where M represents at least one of lithium (Li), nickel (Ni), manganese (Mn), cobalt (Co), aluminum (Al), iron (Fe), titanium (Ti), tin (Sn), niobium (Nb), silicon (Si), carbon (C), and copper (Cu).

6. The method for separating a constituent material from a member according to any one of claims 1 to 5, wherein the separated liquid contains the lithium (Li) element, the sulfur (S) element, and the phosphorous (P) element.

7. A method for processing a member, comprising the steps of:
- mixing the member that includes an active material and a solid electrolyte that contains a lithium (Li) element, a sulfur (S) element, and a phosphorous (P) element with a solvent to obtain a mixture in which the solid electrolyte is dissolved in the solvent;
- subjecting the mixture to solid-liquid separation to obtain a solid component and a separated liquid; and
recovering a compound that contains at least one of the lithium (Li) element, the sulfur (S) element, and the phosphorous (P) element from the separated liquid,
wherein the solid electrolyte is dissolved in the solvent as a result of the member being mixed with the solvent.

8. The method for processing a member according to claim 7, wherein the solvent has a solubility for dissolving the solid electrolyte at 20°C of 1 mg/mL or more.

9. The processing method according to claim 7 or 8, wherein the solvent has a hydroxyl group.

10. The method for processing a member according to any one of claims 7 to 9, wherein the compound is at least one of lithium sulfide, phosphorus sulfide, and lithium halide.

11. A method for processing a member, comprising the steps of:
- mixing the member that includes an active material and a solid electrolyte with a solvent to obtain a mixture in which the solid electrolyte is dissolved in the solvent;
- subjecting the mixture to solid-liquid separation to obtain a solid component and a separated liquid; and
- acid-dissolving the solid component to recover a carbon component that is a dissolved residue,
wherein the solid electrolyte contains a lithium (Li) element, a sulfur (S) element, and a phosphorous (P) element, and
the solid electrolyte is dissolved in the solvent as a result of the member being mixed with the solvent.

12. The method for processing a member according to claim 11, wherein the solvent has a solubility for dissolving the solid electrolyte at 20°C of 1 mg/mL or more.

13. The method for processing a member according to claim 11 or 12, wherein the solvent has a hydroxyl group.

14. A method for processing a member, comprising the steps of:
- mixing the member including an active material and a solid electrolyte with a solvent to obtain a mixture in which the solid electrolyte is dissolved in the solvent, the active material containing an element M, where M represents at least one of lithium (Li), nickel (Ni), manganese (Mn), cobalt (Co), aluminum (Al), iron (Fe), titanium (Ti), tin (Sn), niobium (Nb), silicon (Si), carbon (C), and copper (Cu);
- subjecting the mixture to solid-liquid separation to obtain a solid component and a separated liquid;
- acid-dissolving the solid component to obtain a dissolution liquid; and
- recovering the element M from the dissolution liquid,
wherein the solid electrolyte contains a lithium (Li) element, a sulfur (S) element, and a phosphorous (P) element, and
the solid electrolyte is dissolved in the solvent as a result of the member being mixed with the solvent.

15. The method for processing a member according to claim 14, further comprising a step of acid-dissolving the solid component to recover a carbon component that is a dissolved residue.

16. The method for processing a member according to claim 14 or 15, wherein the solvent has a solubility for dissolving the solid electrolyte at 20°C of 1 mg/mL or more.

17. The method for processing a member according to any one of claims 14 to 16, wherein the solvent has a hydroxyl group.
